# EUROPÄISCHE PATENTSCHRIFT

(11) **EP 3 073 578 B1**
(45) Veröffentlichungstag und Bekanntmachung des Hinweises auf die Patenterteilung: **15.04.2020**
(21) Anmeldenummer: 16154645.2
(22) Anmeldetag: 08.02.2016
(51) Int. Cl.: H01R 13/453, G02B 6/38

(54) **STECKERTEIL**
CONNECTOR PLUG
FICHE MALE DE CONNECTEUR

(30) Priorität: 18.03.2015 DE 202015101396 U
(43) Veröffentlichungstag der Anmeldung: 28.09.2016
(73) Patentinhaber: NEUTRIK AG, 9494 Schaan (LI)
(72) Erfinder: Koch, Matthias, 6840 Götzis (AT)
(74) Vertreter: Fechner, Thomas

(56) Entgegenhaltungen:
- US-A- 6 079 881
- US-A1- 2010 014 812
- US-A1- 2014 294 348

## Beschreibung

Die vorliegende Erfindung betrifft ein Steckerteil zur Herstellung einer optischen und/oder elektrischen Steckverbindung mit einem Gegensteckerteil durch Zusammenstecken des Steckerteils mit dem Gegensteckerteil in zumindest einer Zusammensteckrichtung, wobei das Steckerteil ein Steckerteilgehäuse und zumindest einen optischen und/oder elektrischen Kontakt und ein in eine Richtung parallel zur Zusammensteckrichtung wirkendes elastisches Öffnungsvorspannelement und ein Öffnungselement zum Öffnen einer Klappe am Gegensteckerteil aufweist, wobei das Öffnungselement in Richtungen parallel zur Zusammensteckrichtung relativ zum Steckerteilgehäuse in oder an dem Steckerteilgehäuse verschiebbar gelagert ist und in einer dieser Richtungen parallel zur Zusammensteckrichtung vom Öffnungsvorspannelement vorgespannt ist.

Steckerteile zur Herstellung von optischen und/oder elektrischen Steckverbindungen sind in einer Vielzahl von Ausgestaltungsformen bekannt. Über die optischen und/oder elektrischen Steckverbindungen können sowohl optische und/oder elektrische Signale als auch Leistung übertragen werden. Bei empfindlicheren Kontakten ist es beim Stand der Technik bereits bekannt, diese im auseinandergesteckten Zustand von Steckerteil und Gegensteckerteil durch eine Klappe vor äußeren Einflüssen zu schützen. Als Beispiel wird hier auf die EP 2 146 232 A1 verwiesen. In dieser Schrift haben sowohl das Steckerteil als auch das Gegensteckerteil jeweils eine die Kontakte schützende Klappe, welche erst beim Zusammenstecken von Steckerteil und Gegensteckerteil geöffnet wird.

Aufgabe der Erfindung ist es, das Öffnungselement, welches zum Öffnen der Klappe im Gegensteckerteil dient, möglichst einfach und dennoch betriebssicher auszugestalten.

Hierzu sieht die Erfindung bei einem Steckerteil der oben genannten Art vor, dass das Öffnungselement als einstückiger Körper ausgebildet ist und eine erste Anlagefläche für das Öffnungsvorspannelement und eine zweite Anlagefläche zum Öffnen der Klappe des Gegensteckerteils aufweist.

Das Öffnungselement ist somit im Gegensatz zum oben genannten Stand der Technik sehr einfach als einstückiger, vorzugsweise in sich starrer Körper, ausgebildet. Es weist eine erste Anlagefläche für das Öffnungsvorspannelement und eine zweite Anlagefläche zum Öffnen der Klappe des Gegensteckerteils auf.

Das Öffnungselement kann sehr einfach gestaltet sein. Es kann sich z.B. um einen stiftartigen Schieber oder dergleichen handeln. Im Sinne einer möglichst einfachen aber auch betriebssicheren Führung des Öffnungselementes beim Verschieben des Öffnungselementes in Richtung parallel zur Zusammensteckrichtung sehen bevorzugte Ausgestaltungsformen vor, dass das Öffnungselement als ringförmiges Element mit einer zentralen Öffnung zum Hindurchführen des optischen und/oder elektrischen Kontakts ausgebildet ist. Die Öffnungsebene der zentralen Öffnung im Öffnungselement ist günstigerweise permanent normal zur Zusammensteckrichtung ausgerichtet.

Um sicherzustellen, dass das Öffnungselement vom Öffnungsvorspannelement nicht aus dem Steckerteilgehäuse herausgedrückt wird, ist günstigerweise ein Gegenanschlag am Steckerteilgehäuse vorgesehen, welcher das Öffnungselement im Steckerteilgehäuse hält. In diesem Sinne sehen bevorzugte Ausgestaltungsformen der Erfindung vor, dass das Öffnungselement eine Anschlagfläche zum Anschlagen an zumindest einem Gegenanschlag am Steckerteilgehäuse aufweist.

Im Sinne einer einfachen Herstellbarkeit des Steckerteils sehen besonders bevorzugte Varianten vor, dass das Steckerteil zumindest einen oder den Gegenanschlag aufweist, an dem das Öffnungselement anschlägt, wobei der Gegenanschlag zunächst als separates Teil gefertigt und als solches am Steckerteilgehäuse fixiert ist. Dies bietet sich vor allem an, wenn das Steckerteilgehäuse im Spritzguss gefertigt wird. Beim Spritzguss ist es günstig, möglichst wenig Hinterschnitte berücksichtigen zu müssen. Dadurch, dass der Gegenanschlag zunächst als separates Teil gefertigt wird, ist es möglich, das Steckerteilgehäuse im Spritzguss zunächst ohne den Gegenanschlag zu fertigen, was das Endformen des spritzgegossenen Steckteilgehäuses erleichtert. Erst im Anschluss daran wird dann der als separates Teil gefertigte Gegenanschlag am Steckerteilgehäuse fixiert. Diese Fixierung kann z.B. durch Einkleben, Verschweißen, Verpressen oder dergleichen erfolgen. In bevorzugten Ausgestaltungsformen ist auch der Gegenanschlag als ringförmiges Element mit einer zentralen Öffnung zum Hindurchführen des optischen und/oder elektrischen Kontaktes ausgebildet.

Als elastisches Öffnungsvorspannelement können unterschiedlichste Federn, Elastomerkörper oder dergleichen zum Einsatz kommen. Bevorzugte Ausgestaltungsformen der Erfindung sehen vor, dass das elastische Öffnungsvorspannelement als eine in einer Richtung parallel zur Zusammensteckrichtung komprimierbare Schraubenfeder ausgebildet ist, und/oder der optische und/oder elektrische Kontakt in einem von dem elastischen Offnungsvorspannelement umgebenen Innenraum angeordnet ist. Die optischen und/oder elektrischen Kontakte des Steckerteils sind in bevorzugten Ausgestaltungsformen in einem Kontaktträger zusammengefasst. Dieser Kontaktträger könnte auch als Ferrule bezeichnet werden. Auch der Kontaktträger befindet sich in bevorzugten Varianten im vom elastischen Öffnungsvorspannelement umgebenen Innenraum.

Wie oben bereits angedeutet, betrifft die Erfindung nicht nur das erfindungsgemäße Steckerteil selbst sondern auch eine Steckverbindung mit einem erfindungsgemäßen Steckerteil und einem Gegensteckerteil, wobei das Gegensteckerteil zumindest eine Klappe aufweist und beim Zusammenstecken des Steckerteils mit dem Gegensteckerteil das Öffnungselement des Steckerteils mit seiner zweiten Anlagefläche die Klappe des Gegensteckerteils öffnet.

Damit sichergestellt ist, dass der optische und/oder der elektrische Kontakt des Steckerteils bei diesem Einsteck- bzw. Öffnungsvorgang nicht beschädigt werden, sehen bevorzugte Varianten vor, dass das Öffnungselement des Steckerteils mit seiner zweiten Anlagefläche die Klappe öffnet bevor der optische und/oder elektrische Kontakt des Steckerteils auf die Klappe auftrifft. Dies kann durch Abstimmung der entsprechenden Geometrien der beteiligten Bauteile in verschiedensten Varianten sichergestellt werden.

Grundsätzlich sei darauf hingewiesen, dass jedes Steckerteil und auch Gegensteckerteil gemäß der Erfindung nur einen aber auch mehrere optische und/oder elektrische Kontakte aufweisen kann. Wenn hier von dem optischen und/oder elektrischen Kontakt gesprochen wird, so dient dies nur als sprachliche Vereinfachung.

Damit das Öffnungselement die Klappe öffnet, bevor es im Steckerteilgehäuse verschoben wird, sehen bevorzugte Varianten der Steckverbindung vor, dass die Klappe von zumindest einem elastischen Klappenvorspannelement in Richtung hin zu ihrer Schließstellung vorgespannt ist, wobei zumindest in Richtung parallel zur Zusammensteckrichtung die vom elastischen Öffnungsvorspannelement auf das Öffnungselement ausgeübte Vorspannkraft größer ist als die zum Öffnen der Klappe benötigte Kraft. Weiters ist günstigerweise vorgesehen, dass das Gegensteckerteil zumindest zwei in Richtungen parallel zur Zusammensteckrichtung relativ zueinander verschiebbar gelagerte Gehäuseteile aufweist, wobei eines der Gehäuseteile zumindest ein Betätigungselement zum Öffnen der Klappe aufweist und das Öffnungselement dieses Gehäuseteil mit dem Betätigungselement beim Zusammenstecken von Steckerteil und Gegensteckerteil zum Öffnen der Klappe relativ zum anderen Gehäuseteil verschiebt.

Weitere Merkmale und Einzelheiten eines bevorzugten Ausführungsbeispiels der Erfindung werden in der Figurenbeschreibung nachfolgend dargelegt. Es zeigen:
Fig. 1 eine Explosionsdarstellung einer erfindungsgemäß ausgebildeten Steckverbindung und die
Fig. 2 bis 5 eine Sequenz von Längsschnitten durch diese Steckverbindung in verschiedenen Stellungen vor, während und am Ende des Zusammensteckvorgangs von Steckerteil und Gegensteckerteil.

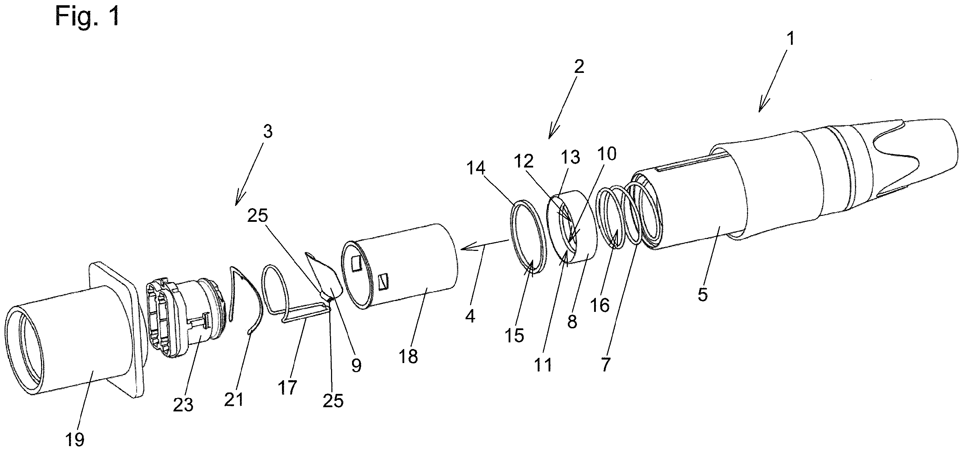

In der Explosionsdarstellung gemäß Fig. 1 sind sowohl das Steckerteil 1 als auch das Gegensteckerteil 3 der Steckverbindung 2 dargestellt. Das Steckerteil 1 weist zusätzlich zum Steckerteilgehäuse 5 u.a. auch das Öffnungsvorspannelement 7, das hier ringförmig ausgebildete Öffnungselement 8 und den hier ebenfalls ringförmig ausgebildeten Gegenanschlag 14 auf. Das Öffnungselement 8 umfasst eine zentrale Öffnung 12 durch die die in Fig. 1 nicht sichtbaren Kontakte 6 des Steckerteils 1 hindurchgeführt werden können. Das Öffnungselement 8 stützt sich mit seiner ersten Anlagefläche 10 am, hier als Schraubenfeder ausgebildeten, elastischen Öffnungsvorspannelementes 7 ab. Die zweite Anlagefläche 11 des Öffnungselements 8 dient zum Betätigen und Öffnen der Klappe 9, wie dies weiter unten im Detail erläutert wird. Mit der Anschlagfläche 13 schlägt das Öffnungselement 8 so am Gegenanschlag 14 an, dass es von dem Öffnungsvorspannelement 7 nicht aus dem Gehäuse 5 herausgedrückt werden kann.

Gut zu sehen ist in Fig. 1 auch die zentrale Öffnung 15 im ringförmigen Gegenanschlag 14 durch die die optischen und/oder elektrischen Kontakte 6 des Steckerteils 1 ebenfalls hindurchgeführt werden können. Eingezeichnet ist in Fig. 1 auch die Zusammensteckrichtung 4, in der das Steckerteil 1 beim Zusammenstecken in das Gegensteckerteil 3 eingeschoben werden kann.

Das in Fig. 1 ebenfalls in einer der Explosionsdarstellungen gezeigte Gegensteckerteil 3 ist im Wesentlichen dem entsprechenden, in der EP 2 146 232 A1 gezeigten Gegensteckerteil nachempfunden. Es weist zwei parallel zur Zusammensteckrichtung 4 relativ zueinander verschiebbare Gehäuseteile 18 und 19 auf. Fix im Gehäuseteil 19 montiert ist der Gegenkontaktträger 23, welcher die optischen und/oder elektrischen Gegenkontakte 24 dieses Gegensteckerteils 3 trägt. Zwischen dem Gehäuseteil 18 und dem Gehäuseteil 19 wirkt das hier als Blattfeder ausgebildete weitere Vorspannelement 21. Das, die Klappe 9 des Gegensteckerteil 3 sowohl tragende als auch in Richtung Schließstellung vorspannende, Klappenvorspannelement 17 ist auf dem Gegenkontaktträger 23 abgestützt. Es wirkt über die Schrägflächen 25 an der Klappe 9 auf diese Klappe 9 ein, wie dies in der EP 2 146 232 A1 insbesondere anhand der Fig. 6 bis 10 im Detail gezeigt und beschrieben ist.

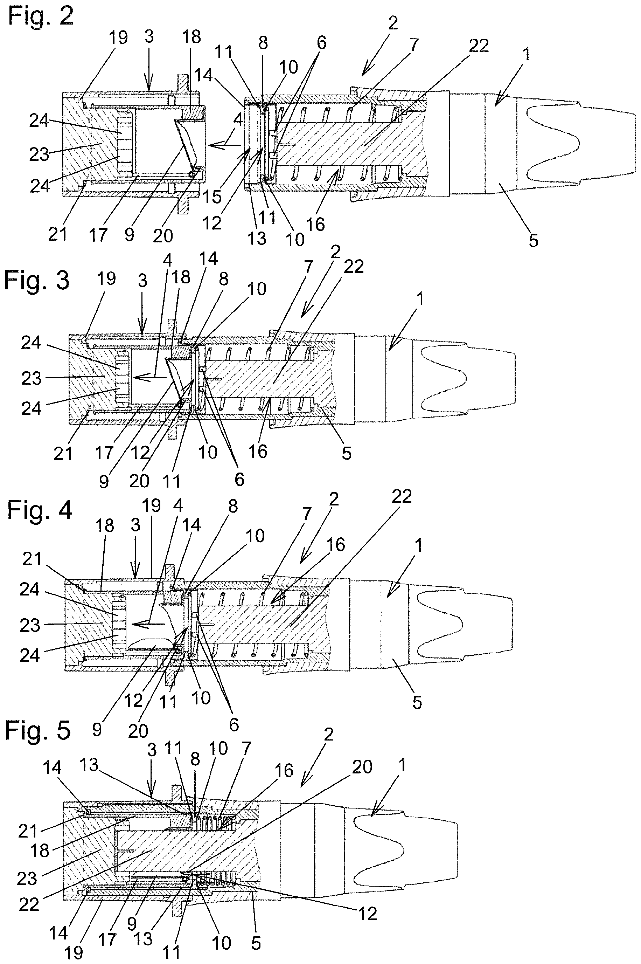

Anhand der Fig. 2 bis 5, welche jeweils einen Längsschnitt sowohl durch das Steckerteil 1 als auch durch das Gegensteckerteil 3 zeigen, werden nun die Vorgänge beim Zusammenstecken der Steckverbindung 2 erläutert, wenn das Steckerteil 1 in Zusammensteckrichtung 4 in das Gegensteckerteil 3 eingesteckt wird.

Fig. 2 zeigt in einem Längsschnitt die Situation kurz bevor das Steckerteil 1 in Zusammensteckrichtung 4 in das Gegensteckerteil 3 eingeschoben wird. Im Gegensteckerteil 3 befindet sich die Klappe 9 in ihrer Schließstellung. Im Steckerteil 1 ist das Öffnungselement 8 von dem hier in Form einer Schraubenfeder ausgebildeten Öffnungsvorspannelement 7 so weit nach vorne geschoben, dass es mit seiner Anschlagfläche 13 am ringförmig ausgebildeten Gegenanschlag 14 anliegt. Der Gegenanschlag 14 ist als gesondertes Bauteil gefertigt und in das Steckerteilgehäuse 5 eingefügt und dort fixiert. Das Öffnungsvorspannelement 7 drückt gegen die erste Anlagefläche 10 des Steckerteils 1. Der Kontaktträger 22 mit den Kontakten 6 des Steckerteils 1 befindet sich im Innenraum 16 des Öffnungsvorspannelements 7.

Wird nun das Steckerteil 1 in Zusammensteckrichtung 4 in das Gegensteckerteil 3 eingeschoben, so kommt die zweite Anlagefläche 11 des Öffnungselementes 8 mit dem Gehäuseteil 18 des Steckerteils 1 in Kontakt. Dies ist in Fig. 3 dargestellt. Wird nun weiter in Zusammensteckrichtung 4 Druck auf das Steckerteil 1 ausgeführt, so führt dies, wie in Fig. 4 zu sehen ist, zum Öffnen der Klappe 9. Hierfür ist, in bevorzugten Ausgestaltungsformen wie der hier gezeigten vorgesehen, dass die vom elastischen Vorspannelement 7 auf das Öffnungselement 8 ausgeübte Vorspannung bzw. Kraft größer ist als die zum Öffnen der Klappe 9 benötigten Kräfte. Im hier gezeigten Ausführungsbeispiel ergeben sich diese Kräfte einerseits durch das weitere Vorspannelement 21 und andererseits durch das Klappenvorspannelement 17. Bei der hier gezeigten Variante ist es so, dass das Öffnungselement 8, abgestützt vom Öffnungsvorspannelement 7, zunächst das Gehäuseteil 18 in Zusammensteckrichtung 4 in Richtung zum Gehäuseteil 19 des Gegensteckerteils 3 drückt, womit das hier als Blattfeder ausgebildete weitere Vorspannelement 21 deformiert wird. Dies ist gut im Vergleich von Fig. 3 und Fig. 4 zu sehen. Durch das Einschieben des Gehäuseteils 18 in das Gehäuseteil 19 drückt das am Gehäuseteil 18 fix angeordnete Betätigungselement 20 gegen die Klappe 9, wodurch diese gegen die Vorspannung des Klappenvorspannelementes 17 geöffnet wird, womit die Stellung gemäß Fig. 4 erreicht ist.

Erst wenn das Gehäuseteil 18 nicht mehr in Zusammensteckrichtung 4 gegen das Gehäuseteil 19 verschoben werden kann, führt ein weiteres Einschieben des Steckerteils 1 in das Gegensteckerteil 13 in Zusammensteckrichtung 4 dazu, dass nun das Öffnungsvorspannelement 7 gegen seine elastische Vorspannung zusammengestaucht wird, wobei das Öffnungselement 8 entgegen der Zusammensteckrichtung 4 in das Steckerteilgehäuse 5 eingeschoben wird, bis die in Fig. 5 dargestellte Stellung erreicht ist. In dieser Stellung ist das Steckerteil 1 vollständig in das Gegensteckerteil 3 eingeschoben und die optischen und/oder elektrischen Kontakte 6 des Steckerteils 1 sind mit den Gegenkontakten 24 des Gegensteckerteils 3 in elektrisch und/oder optisch leitende Verbindung gebracht. Eine Verriegelung von Steckerteil 1 und Gegensteckerteil 2 in der in Fig. 5 gezeigten, vollkommen zusammengesteckten Stellung kann wie beim Stand der Technik erfolgen. Es kann sich z.B. um eine mittels Knopfdruck oder dergleichen lösbare Verriegelung handeln. Dies ist hier nicht gesondert dargestellt.

Zieht man das Steckerteil 1 entgegen der Zusammensteckrichtung 4 nun aus dem Gegensteckerteil 3 heraus, so läuft der Aussteckvorgang entsprechend einer Abfolge der Fig. 5, 4, 3 und 2 ab, was nicht noch einmal im Detail erläutert werden muss. Es ist jedenfalls so, dass beim Herausziehen, ausgehend von Fig. 5, das Öffnungsvorspannelement 7 zunächst das Öffnungselement 8 wieder in Richtung hin zum Gegenanschlag 14 drückt. Erst wenn das Öffnungselement 8 mit seiner Anschlagfläche 13 wieder am Gegenanschlag 14 anliegt (vgl. Fig. 4) und das Steckerteil 1 dann entgegen der Zusammensteckrichtung 4 weiter aus dem Gegensteckerteil 3 herausgezogen wird, kann das weitere Vorspannelement 21 das Gehäuseteil 18 wieder entgegen der Zusammensteckrichtung 4 aus dem Gehäuseteil 19 des Gegensteckerteils 3 herausschieben. Dann gibt das Betätigungselement 20 dann die Klappe 9 wieder frei und das Klappenvorspannelement 17 kann die Klappe 9 wieder schließen, wie dies in Fig. 3 gezeigt ist.

Im gezeigten Ausführungsbeispiel ist es beim Einsteckvorgang also so, dass das Öffnungselement 8 des Steckerteils 1 mit seiner zweiten Anlagefläche 11 die Klappe 9 öffnet, bevor der optische und/oder elektrische Kontakt 6 des Steckerteils 1 auf die Klappe 9 auftrifft.

### Legende

### zu den Hinweisziffern:

- 1: Steckerteil
- 2: Steckverbindung
- 3: Gegensteckerteil
- 4: Zusammensteckrichtung
- 5: Steckerteilgehäuse
- 6: Kontakt
- 7: Öffnungsvorspannelement
- 8: Öffnungselement
- 9: Klappe
- 10: erste Anlagefläche
- 11: zweite Anlagefläche
- 12: zentrale Öffnung
- 13: Anschlagfläche
- 14: Gegenanschlag
- 15: zentrale Öffnung
- 16: Innenraum
- 17: Klappenvorspannelement
- 18: Gehäuseteil
- 19: Gehäuseteil
- 20: Betätigungselement
- 21: weiteres Vorspannelement
- 22: Kontaktträger
- 23: Gegenkontaktträger
- 24: Gegenkontakt
- 25: Schrägfläche

## Patentansprüche

1. Steckerteil (1) zur Herstellung einer optischen und/oder elektrischen Steckverbindung (2) mit einem Gegensteckerteil (3) durch Zusammenstecken des Steckerteils (1) mit dem Gegensteckerteil (3) in zumindest einer Zusammensteckrichtung (4), wobei das Steckerteil (1) ein Steckerteilgehäuse (5) und zumindest einen optischen und/oder elektrischen Kontakt (6) und ein in eine Richtung parallel zur Zusammensteckrichtung (4) wirkendes elastisches Öffnungsvorspannelement (7) und ein Öffnungselement (8) zum Öffnen einer Klappe (9) am Gegensteckerteil (3) aufweist, wobei das Öffnungselement (8) in Richtungen parallel zur Zusammensteckrichtung (4) relativ zum Steckerteilgehäuse (5) in oder an dem Steckerteilgehäuse (5) verschiebbar gelagert ist und in einer dieser Richtungen parallel zur Zusammensteckrichtung (4) vom Öffnungsvorspannelement (7) vorgespannt ist, **dadurch gekennzeichnet, dass** das Öffnungselement (8) als einstückiger Körper ausgebildet ist und eine erste Anlagefläche (10) für das Öffnungsvorspannelement (7) und eine zweite Anlagefläche (11) zum Öffnen der Klappe (9) des Gegensteckerteils (3) aufweist.

2. Steckerteil (1) nach Anspruch 1, **dadurch gekennzeichnet, dass** das Öffnungselement (8) als ringförmiges Element mit einer zentralen Öffnung (12) zum Hindurchführen des optischen und/oder elektrischen Kontakts (6) ausgebildet ist.

3. Steckerteil (1) nach Anspruch 1 oder 2, **dadurch gekennzeichnet, dass** das Öffnungselement (8) eine Anschlagfläche (13) zum Anschlagen an zumindest einem Gegenanschlag (14) am Steckerteilgehäuse (5) aufweist.

4. Steckerteil (1) nach einem der Ansprüche 1 bis 3, **dadurch gekennzeichnet, dass** das Steckerteil (1) zumindest einen oder den Gegenanschlag (14) aufweist, an dem das Öffnungselement (8) anschlägt, wobei der Gegenanschlag (14) zunächst als separates Teil gefertigt und als solches am Steckerteilgehäuse (5) fixiert ist.

5. Steckerteil (1) nach Anspruch 4, **dadurch gekennzeichnet, dass** der Gegenanschlag (14) als ringförmiges Element mit einer zentralen Öffnung (15) zum Hindurchführen des optischen und/oder elektrischen Kontakts (6) ausgebildet ist.

6. Steckerteil (1) nach einem der Ansprüche 1 bis 5, **dadurch gekennzeichnet, dass** das elastische Öffnungsvorspannelement (7) als eine in einer Richtung parallel zur Zusammensteckrichtung (4) komprimierbare Schraubenfeder ausgebildet ist, und/oder der optische und/oder elektrische Kontakt (6) in einem von dem elastischen Öffnungsvorspannelement (7) umgebenen Innenraum (16) angeordnet ist.

7. Steckverbindung (2) mit einem Steckerteil (1) nach einem der Ansprüche 1 bis 6 und einem Gegensteckerteil (3), wobei das Gegensteckerteil (3) zumindest eine Klappe (9) aufweist und beim Zusammenstecken des Steckerteils (1) mit dem Gegensteckerteil (3) das Öffnungselement (8) des Steckerteils (1) mit seiner zweiten Anlagefläche (11) die Klappe (9) des Gegensteckerteils (3) öffnet.

8. Steckverbindung (2) nach Anspruch 7, **dadurch gekennzeichnet, dass** das Öffnungselement (8) des Steckerteils (1) mit seiner zweiten Anlagefläche (11) die Klappe (9) öffnet bevor der optische und/oder elektrische Kontakt (6) des Steckerteils (1) auf die Klappe (9) auftrifft.

9. Steckverbindung (2) nach Anspruch 7 oder 8, **dadurch gekennzeichnet, dass** die Klappe (9) von zumindest einem elastischen Klappenvorspannelement (17) in Richtung hin zu ihrer Schließstellung vorgespannt ist, wobei zumindest in Richtung parallel zur Zusammensteckrichtung (4) die vom elastischen Öffnungsvorspannelement (7) auf das Öffnungselement (8) ausgeübte Vorspannkraft größer ist als die zum Öffnen der Klappe (9) benötigte Kraft.

10. Steckverbindung (2) nach einem der Ansprüche 7 bis 9, **dadurch gekennzeichnet, dass** das Gegensteckerteil (3) zumindest zwei in Richtungen parallel zur Zusammensteckrichtung (4) relativ zueinander verschiebbar gelagerte Gehäuseteile (18, 19) aufweist, wobei eines der Gehäuseteile (18) zumindest ein Betätigungselement (20) zum Öffnen der Klappe (9) aufweist und das Öffnungselement (8) dieses Gehäuseteil (18) mit dem Betätigungselement (20) beim Zusammenstecken von Steckerteil (1) und Gegensteckerteil (3) zum Öffnen der Klappe (9) relativ zum anderen Gehäuseteil (19) verschiebt.

## Claims

1. A plug part (1) for producing an optical and/or electrical plug-in connection (2) with a mating plug part (3) by plugging together the plug part (1) with the mating plug part (3) in at least one plug-assembly direction (4), wherein the plug part (1) has a plug part housing (5) and at least one optical and/or electrical contact (6) and a resilient opening pretensioning element (7) which acts in a direction parallel to the plug-assembly direction (4) and an opening element (8) for opening a flap (9) on the mating plug part (3), wherein the opening element (8) in or on the plug part housing (5) in directions parallel to the plug-assembly direction (4) is mounted displaceably relative to the plug part housing (5) and is pretensioned by the opening pretensioning element (7) in one of these directions parallel to the plug-assembly direction (4), **characterised in that** the opening element (8) is designed as a one-piece body and has a first contact face (10) for the opening pretensioning element (7) and a second contact face (11) for opening the flap (9) of the mating plug part (3).

2. A plug part (1) according to Claim 1, **characterised in that** the opening element (8) is designed as an annular element with a central opening (12) for the optical and/or electrical contact (6) to pass through.

3. A plug part (1) according to Claim 1 or 2, **characterised in that** the opening element (8) has a stop face (13) for striking against at least one counter-stop (14) on the plug part housing (5).

4. A plug part (1) according to one of Claims 1 to 3, **characterised in that** the plug part (1) has at least one or the counter-stop (14) against which the opening element (8) strikes, the counter-stop (14) initially being manufactured as a separate part and being fixed as such to the plug part housing (5).

5. A plug part (1) according to Claim 4, **characterised in that** the counter-stop (14) is designed as an annular element with a central opening (15) for the optical and/or electrical contact (6) to pass through.

6. A plug part (1) according to one of Claims 1 to 5, **characterised in that** the resilient opening pretensioning element (7) is designed as a helical spring which is compressible in a direction parallel to the plug-assembly direction (4), and/or the optical and/or electrical contact (6) is arranged in an interior (16) surrounded by the resilient opening pretensioning element (7).

7. A plug-in connection (2) with a plug part (1) according to one of Claims 1 to 6 and a mating plug part (3), wherein the mating plug part (3) has at least one flap (9) and upon plugging together the plug part (1) with the mating plug part (3) the opening element (8) of the plug part (1) with its second contact face (11) opens the flap (9) of the mating plug part (3).

8. A plug-in connection (2) according to Claim 7, **characterised in that** the opening element (8) of the plug part (1) with its second contact face (11) opens the flap (9) before the optical and/or electrical contact (6) of the plug part (1) strikes the flap (9).

9. A plug-in connection (2) according to Claim 7 or 8, **characterised in that** the flap (9) is pretensioned in the direction of its closed position by at least one resilient flap pretensioning element (17), with at least in the direction parallel to the plug-assembly direction (4) the pretensioning force exerted by the resilient opening pretensioning element (7) on the opening element (8) being greater than the force required for opening the flap (9).

10. A plug-in connection (2) according to one of Claims 7 to 9, **characterised in that** the mating plug part (3) has at least two housing parts (18, 19) mounted displaceably relative to each other in directions parallel to the plug-assembly direction (4), with one of the housing parts (18) having at least one actuating element (20) for opening the flap (9) and the opening element (8) displacing this housing part (18) with the actuating element (20) relative to the other housing part (19) upon plugging together the plug part (1) and mating plug part (3) for opening the flap (9).

## Revendications

1. Pièce de connexion par fiche (1) pour l'établissement d'une connexion par fiche (2) optique et/ou électrique avec une pièce de contre-fiche (3) par enfichage de la pièce de connexion par fiche (1) et de la pièce de contre-fiche (3) l'une dans l'autre dans au moins une direction d'enfichage (4), la pièce de connexion par fiche (1) étant munie d'un boîtier de pièce de connexion par fiche (5) et d'au moins un contact optique et/ou électrique (6) et d'un élément de précontrainte d'ouverture (7) élastique agissant dans une direction parallèle à la direction d'enfichage (4), et d'un élément d'ouverture (8) pour ouvrir un clapet (9) sur la pièce de contre-fiche (3), l'élément d'ouverture (8) étant logé de manière à pouvoir être déplacé dans ou sur le boîtier de pièce de connexion par fiche (5) par rapport au boîtier de pièce de connexion par fiche (5) dans des directions parallèles à la direction d'enfichage (4), et étant précontraint par l'élément de précontrainte d'ouverture (7) dans l'une de ces directions parallèles à la direction d'enfichage (4), **caractérisée en ce que** l'élément d'ouverture (8) est réalisé sous la forme d'un corps d'une seule pièce et est muni d'une première surface d'appui (10) pour l'élément de précontrainte d'ouverture (7) et d'une deuxième surface d'appui (11) pour ouvrir le clapet (9) de la pièce de contre-fiche (3).

2. Pièce de connexion par fiche (1) selon la revendication 1, **caractérisée en ce que** l'élément d'ouverture (8) est réalisé sous la forme d'un élément annulaire avec une ouverture centrale (12) pour le passage du contact optique et/ou électrique (6).

3. Pièce de connexion par fiche (1) selon la revendication 1 ou 2, **caractérisée en ce que** l'élément d'ouverture (8) est muni d'une surface de butée (13) pour buter contre au moins une contre-butée (14) sur le boîtier de pièce de connexion par fiche (5).

4. Pièce de connexion par fiche (1) selon l'une des revendications 1 à 3, **caractérisée en ce que** la pièce de connexion par fiche (1) est munie d'au moins une ou de la contre-butée (14) contre laquelle bute l'élément d'ouverture (8), la contre-butée (14) étant d'abord fabriquée en tant que pièce séparée et fixée en tant que telle sur le boîtier de pièce de connexion par fiche (5).

5. Pièce de connexion par fiche (1) selon la revendication 4, **caractérisée en ce que** la contre-butée (14) est réalisée sous la forme d'un élément annulaire avec une ouverture centrale (15) pour le passage du contact optique et/ou électrique (6).

6. Pièce de connexion par fiche (1) selon l'une des revendications 1 à 5, **caractérisée en ce que** l'élément de précontrainte d'ouverture (7) élastique est réalisé sous forme de ressort hélicoïdal compressible dans une direction parallèle à la direction d'enfichage (4), et/ou le contact optique et/ou électrique (6) est disposé dans un espace intérieur (16) entouré par l'élément de précontrainte d'ouverture (7) élastique.

7. Connexion par fiche (2) avec une pièce de connexion par fiche (1) selon l'une des revendications 1 à 6 et une pièce de contre-fiche (3), la pièce de contre-fiche (3) étant munie d'au moins un clapet (9) et, lorsque la pièce de connexion par fiche (1) et la pièce de contre-fiche (3) sont enfichées l'une dans l'autre, l'élément d'ouverture (8) de la pièce de connexion par fiche (1) ouvre le clapet (9) de la pièce de contre-fiche (3) avec sa deuxième surface d'appui (11).

8. Connexion par fiche (2) selon la revendication 7, **caractérisée en ce que** l'élément d'ouverture (8) de la pièce de connexion par fiche (1) ouvre le clapet (9) avec sa deuxième surface d'appui (11) avant que le contact optique et/ou électrique (6) de la pièce de connexion par fiche (1) ne touche le clapet (9).

9. Connexion par fiches (2) selon la revendication 7 ou 8, **caractérisée en ce que** le clapet (9) est précontraint en direction de sa position de fermeture par au moins un élément de précontrainte de clapet (17) élastique, la force de précontrainte exercée sur l'élément d'ouverture (8) par l'élément de précontrainte d'ouverture (7) élastique étant, au moins dans la direction parallèle à la direction d'enfichage (4), supérieure à la force nécessaire pour ouvrir le clapet (9).

10. Connexion par fiches (2) selon l'une des revendications 7 à 9, **caractérisée en ce que** la pièce de contre-fiche (3) est munie d'au moins deux parties de boîtier (18, 19) montées de manière à pouvoir se déplacer l'une par rapport à l'autre dans des directions parallèles à la direction d'enfichage (4), l'une des parties de boîtier (18) étant munie d'au moins un élément d'actionnement (20) pour ouvrir le clapet (9), et l'élément d'ouverture (8) déplace par rapport à l'autre partie de boîtier (19) cette partie de boîtier (18) avec l'élément d'actionnement (20) lorsque la pièce de connexion par fiche (1) et la pièce de contre-fiche (3) sont enfichées l'une dans l'autre pour ouvrir le clapet (9).
